Europäisches Patentamt

European Patent Office

Office européen des brevets

(19)

(11) Numéro de publication : **0 211 724**
**B1**

(12) **FASCICULE DE BREVET EUROPÉEN**

(45) Date de publication du fascicule du brevet :
13.12.89

(51) Int. Cl.⁴ : **C 01 G 19/00, C 01 B 35/06**

(21) Numéro de dépôt : 86401522.7

(22) Date de dépôt : **09.07.86**

(54) **Procédé de préparation de solutions de sels stanneux.**

(30) Priorité : 12.07.85 FR 8510709

(43) Date de publication de la demande :
25.02.87 Bulletin 87/09

(45) Mention de la délivrance du brevet :
13.12.89 Bulletin 89/50

(84) Etats contractants désignés :
BE DE FR GB IT

(56) Documents cités :
FR--A-- 1 186 281
FR--A-- 2 250 706
US--A-- 2 726 929

(73) Titulaire : RHONE-POULENC CHIMIE
25, quai Paul Doumer
F-92408 Courbevoie Cédex (FR)

(72) Inventeur : Chane Ching, Jean-Yves
19, raritam avenue
Highland Park (US)
Inventeur : Dumousseau, Jean-Yves
60, rue des Dames
F-75017 - Paris (FR)

(74) Mandataire : Dubruc, Philippe et al
RHONE-POULENC INTERSERVICES Service Brevets
Chimie 25, quai Paul-Doumer
F-92408 Courbevoie Cédex (FR)

EP 0 211 724 B1

## Description

La présente invention concerne un procédé de préparation de solutions de sels stanneux et notamment de solutions aqueuses de fluoborate stanneux et de sulfate stanneux.

Certaines solutions de sels stanneux, tels que fluoborate et sulfate, sont utilisées industriellement, notamment pour obtenir des dépôts électrolytiques d'étain.

La préparation de ces sels stanneux est actuellement réalisée suivant des procédés comportant des transformations successives de l'étain métal en chlorure par action d'acide chlorhydrique en présence d'un agent oxydant, le chlore, puis en oxyde SnO par traitement du chlorure stanneux avec une solution de carbonate de sodium, l'oxyde stanneux étant finalement dissous dans l'acide sulfurique ou fluoborique. Ces procédés présentent l'inconvénient de comporter diverses opérations successives entraînant des pertes et conduisent à des produits pouvant comporter de fortes teneurs en étain stannique.

Il est connu que l'on peut préparer certains sels stanneux par simple attaque de l'étain métal par l'acide correspondant. L'inconvénient de ces procédés est la cinétique lente et le faible degré d'avancement présenté par ces réactions. Il est en outre connu que la vitesse de réaction peut être considérablement améliorée par l'addition d'oxygène au milieu réactionnel. Cela nécessite toutefois l'utilisation d'un deuxième réacteur dans lequel on réalise la réduction de l'étain stannique formé par passage de la solution d'étain sur de l'étain métallique en atmosphère inerte ou réductrice (brevet US-A-432 256).

On connaît également un certain nombre de procédés électrolytiques de préparation de sels stanneux (brevets US-A-3 300 397, US-A-3 795 595 et FR-A-2 338 900). Ces procédés sont d'une mise en œuvre difficile.

La présente invention vise à fournir un procédé ne présentant pas les inconvénients de la technique antérieure. Elle vise plus spécifiquement à fournir directement de façon simple des solutions de sels stanneux de pureté satisfaisante et présentant les caractéristiques requises pour les utilisations classiques de ces solutions, notamment une forte teneur en étain total et une faible teneur en étain stannique et en acidité résiduelle.

La présente invention a ainsi pour objet un procédé de préparation d'une solution de sels stanneux d'un acide à anion non oxydant à partir d'étain métallique, caractérisé en ce que l'on fait réagir de l'étain métallique avec une solution d'un acide à anion non oxydant en présence, comme catalyseur de particules finement divisées d'un matériau présentant une faible surtension de dégagement d'hydrogène.

Le procédé selon l'invention permet d'obtenir directement des solutions de sels stanneux à faible teneur en sel stannique qui peuvent être en pratique utilisées commercialement.

Par ailleurs la réaction mise en œuvre dans le procédé présente une cinétique de réaction convenable, même en milieu acide faible. Le procédé présente l'avantage de permettre la préparation directe de solutions à faible acidité libre.

Il est à noter en outre que les solutions de sels d'étain avec des acides à anion non oxydant présentent actuellement un intérêt économique important. Les sels à anions non oxydants peuvent être notamment les chlorure et fluorure stanneux mais ce sont surtout les fluoborate et sulfate stanneux qui présentent le plus grand intérêt industriel.

La solution d'acide est généralement une solution aqueuse, bien que d'autres solvants puissent être envisagés, y compris en mélange avec l'eau.

Du point de vue cinétique de réaction, les solutions d'acide utilisées sont de préférence des solutions concentrées. Toutefois en pratique, la concentration en acide est avantageusement réglée de manière à obtenir une solution de sel stanneux correspondant à une concentration voisine de la solubilité maximale à 20 °C ou à des spécifications commerciales. C'est ainsi qu'on utilise en pratique des solutions d'acide fluoborique 4 à 8 M et des solutions d'acide sulfurique 0,1 à 2 M, de préférence de 1 à 1,7 M.

L'étain métallique peut être utilisé sous forme de poudre d'étain (dont la taille moyenne des particules peut varier par exemple de 0,5 μm à 3 mm) ou de grenaille, c'est-à-dire des particules de forme irrégulière à surface spécifique relativement élevée. Du point de vue cinétique on préfère utiliser des poudres fines bien qu'en pratique des grenailles peuvent parfaitement être utilisées.

L'étain métallique est utilisé avantageusement avec un excès par rapport à la stœchiométrie. Cet excès peut représenter de 0,1 à 100 %. Un tel excès permet de limiter au maximum la présence d'étain stannique dans la solution.

Dans la présente invention par « matériau présentant une faible surtension de dégagement d'hydrogène » on entend des matériaux présentant une surtension de dégagement d'hydrogène inférieure à 100 m.V., déterminée pour de faibles densités de courant de l'ordre de 1 mA cm$^{-2}$.

Ces matériaux sont de préférence des matériaux précieux et notamment le platine, le palladium et le ruthénium. Toutefois tout matériau ayant une faible surtension de dégagement d'hydrogène et inerte aux milieux acides peut être utilisé.

Les métaux précieux à l'état de particules finement divisées sont avantageusement disposés sur un support électriquement conducteur à grande surface spécifique, supérieure avantageusement à 600 m$^2$/g. Ce support peut être notamment du charbon actif. On préfère du charbon actif imprégné de platine

EP 0 211 724 B1

et tout particulièrement du charbon actif imprégné de ruthénium pour des raisons de coût. Ces charbons actifs peuvent contenir jusqu'à 5 % en poids de métal précieux par rapport au poids total métal précieux/charbon.

Le catalyseur est avantageusement utilisé à des teneurs correspondant à un rapport pondéral de $4 \cdot 10^{-5}$ à $2 \cdot 10^{-3}$ par rapport au poids d'étain engagé dans le procédé et de préférence de $10^{-4}$ à $6 \cdot 10^{-4}$ par rapport au poids d'étain engagé dans le procédé.

Par ailleurs on a constaté que le catalyseur conserve pratiquement ses propriétés catalytiques après avoir été utilisé. Il peut donc être recyclé pendant plusieurs cycles, ce qui permet de diminuer notablement le surcoût lié théoriquement à l'utilisation d'un catalyseur onéreux.

La totalité des réactifs peut être mélangée dès le départ. On peut également ne mélanger qu'une partie de l'acide avec la totalité de l'étain et du catalyseur et ajouter le reste en continu ou par portions au cours de la réaction.

La température de réaction est avantageusement de 40 à 90 °C et de préférence de 70 à 90 °C.

Le mélange réactionnel est avantageusement maintenu sous agitation pour activer la réaction.

Sous agitation la durée de la réaction peut être de 2 à 48 h. Elle est de préférence de 5 à 24 h.

Le procédé peut évidemment être mis en œuvre de façon discontinue ou de façon continue.

Les exemples suivants illustrent la présente invention.

Exemple 1

Dans un réacteur cylindrique en téflon d'une capacité de 300 ml, on introduit 80 g d'étain en poudre présentant un diamètre moyen équivalent d'environ 0,2 mm, 0,150 l d'acide fluoborique à 50 % de densité 1,4 et 900 mg de charbon actif à 5 % de ruthénium et à 50 % d'humidité en provenance de la Société Engelhard.

L'ensemble est maintenu sous agitation et à une température de 80 °C pendant 24 heures. Après filtration on recueille une solution limpide de densité d'environ 1,6 dont la composition chimique est déterminée par titrage iodométrique de l'étain II et par interprétation de la courbe de neutralisation par les ions OH⁻ selon la méthode décrite dans Galvano Technik 1975, 66, n° 10, p. 811-819.

Le tableau suivant résume les principales caractéristiques de la solution obtenue

| | |
|---|---|
| $Sn^{2+}$ | $380 \; g \; l^{-1}$ |
| $Sn^{4+}$ | $15 \; g \; l^{-1}$ |
| $HBF_4$ libre | $0,6 \; M$ |
| $H_3BO_3$ libre | $0,7 \; M$ |

Par spectrographie d'émission dans l'arc ainsi que par analyse fluorescence X, on ne détecte pas la présence de ruthénium montrant ainsi des teneurs en ruthénium inférieures à 10 ppm.

Exemple comparatif 1

On opère comme à l'exemple 1 mais sans ajouter de catalyseur au mélange réactionnel.

La concentration en étain II est seulement de 75 g. $1^{-1}$ au bout de 24 heures.

Ceci met en évidence la lenteur de la cinétique de la réaction en l'absence de catalyseur et l'impossibilité d'obtenir sans catalyseur des solutions industriellement utilisables.

Exemple 2

Le résidu solide recueilli par filtration à l'exemple 1 est séché à température ambiante pendant 48 heures. Après ce séchage, ce résidu solide est réintroduit dans le réacteur parallèlement à 57 g d'étain en poudre (10 μm) et 150 ml d'acide fluoborique à 50 %.

L'ensemble réactionnel est maintenu à 80 °C sous agitation pendant 24 heures. Après filtration, on recueille une solution limpide présentant une concentration en $Sn^{2+}$ de l'ordre de 360 g $1^{-1}$.

Le résidu solide recueilli est séché à température ambiante pendant 48 heures.

3

Après séchage, le résidu solide est réintroduit dans le réacteur parallèlement à 54 g d'étain en poudre (10 μm) et 150 ml d'acide fluoborique à 50 %.

L'ensemble réactionnel est maintenu à 80 °C sous agitation pendant 24 heures. La solution limpide recueillie après filtration présente une concentration en Sn$^{2+}$ de l'ordre de 340 gl$^{-1}$.

Cet exemple illustre la possibilité de recycler le charbon actif imprégné de métaux précieux avec conservation de ses propriétés catalytiques.

Exemple 3

Dans un réacteur cylindrique en téflon d'une capacité de 300 ml on introduit 80 g d'étain en poudre (diamètre moyen équivalent 10 μm) 0,150 l d'acide fluoborique à 54 % et 450 mg de charbon actif à 5 % Pt en provenance de la Société Engelhard.

L'ensemble est maintenu sous agitation et à une température de 80 °C pendant 24 heures. Après filtration on recueille une solution limpide de densité environ 1,6 dont la composition chimique est déterminée par titrage iodométrique de l'étain II et par interprétation de la courbe de neutralisation par les ions OH$^-$ selon la méthode précédemment mentionnée.

Le tableau suivant résume les principales caractéristiques de la solution obtenue

| | |
|---|---|
| Sn$^{2+}$ | 430 gl$^{-1}$ |
| Sn$^{4+}$ | 15 gl$^{-1}$ |
| HBF$_4$ libre | 0,5 M |
| H$_3$BO$_3$ libre | 0,7 M |

L'analyse du platine à la spectrométrie dans l'arc ainsi que l'analyse fluorescence X de la solution obtenue ne montrent pas de présence significative du platine (Pt < 10 ppm).

Exemple 4

Dans un réacteur à double enveloppe en verre pyrex ayant une capacité de un litre, on introduit 150 g d'étain en poudre (diamètre moyen équivalent 10 μm) 1 litre d'acide sulfurique 1,125 M et 13,3 g de charbon actif imprégné de ruthénium à 5 % de ruthénium et à 50 % d'humidité.

L'ensemble réactionnel équipé d'un système d'agitation et d'une colonne frigérante est maintenu sous agitation à 80 °C durant 24 heures. On laisse refroidir l'ensemble réactionnel jusqu'à température ambiante. On filtre la solution ainsi obtenue.

Le titrage iodométrique de l'étain II montre une teneur de 122 gl$^{-1}$. Par analyse polarographique sur électrode de mercure, on détermine une teneur en Sn$^{4+}$ de l'ordre de 6 gl$^{-1}$. L'acide résiduel dosé par la soude après complexation des ions Sn$^{2+}$ par des ions oxalates montre une valeur de l'ordre de 9 gl$^{-1}$ en H$_2$SO$_4$.

Sur une partie aliquote, on additionne du tert.butylpyrocatéchol à raison de 1 gl$^{-1}$ de solution et on conserve la solution ainsi stabilisée à l'abri de la lumière. Au bout de 3 mois la solution présente une concentration en Sn$^{2+}$ de 120 gl$^{-1}$.

**Revendications**

1. Procédé de préparation d'une solution de sels stanneux d'un acide à anion non oxydant à partir d'étain métallique, caractérisé en ce que l'on fait réagir de l'étain métallique avec une solution d'un acide à anion non oxydant en présence, comme catalyseur, de particules finement divisées d'un matériau présentant une surtension de dégagement d'hydrogène inférieure à 100 mV déterminée pour des densités de courant de l'ordre de 1 mAcm$^{-2}$.

2. Procédé selon la revendication 1, caractérisé en ce que le catalyseur est un métal précieux.

3. Procédé selon la revendication 2, caractérisé en ce que le métal précieux est choisi parmi le platine, le palladium et le ruthénium.

4. Procédé selon la revendication 2 ou la revendication 3, caractérisé en ce que le métal précieux est disposé sur un support électriquement conducteur à grande surface spécifique.

5. Procédé selon la revendication 4, caractérisé en ce que le métal précieux est disposé sur du charbon actif.

6. Procédé selon la revendication 5, caractérisé en ce que le catalyseur est du charbon actif imprégné de platine ou de ruthénium jusqu'à 5 % en poids.

7. Procédé selon l'une quelconque des revendications précédentes, caractérisé en ce que l'étain métallique est utilisé sous forme de poudre d'étain ou de grenaille d'étain.

8. Procédé selon l'une quelconque des revendications précédentes, caractérisé en ce que la solution d'acide à anion non oxydant est une solution concentrée.

9. Procédé selon l'une quelconque des revendications précédentes, caractérisé en ce que l'acide à anion non oxydant est l'acide fluoborique.

10. Procédé selon l'une quelconque des revendications 1 à 8, caractérisé en ce que l'acide à anion non oxydant est l'acide sulfurique.

11. Procédé selon l'une quelconque des revendications précédentes, caractérisé en ce que l'étain métallique est utilisé en excès par rapport à la stœchiométrie.

12. Procédé selon l'une quelconque des revendications précédentes, caractérisé en ce que le catalyseur est utilisé à des teneurs correspondant à un rapport pondéral de $4 \cdot 10^{-5}$ à $2 \cdot 10^{-3}$ par rapport au poids d'étain engagé dans le procédé.

13. Procédé selon la revendication 12, caractérisé en ce que le catalyseur est utilisé à des teneurs correspondant à un rapport pondéral de $10^{-4}$ à $6 \cdot 10^{-4}$ par rapport au poids d'étain engagé dans le procédé.

14. Procédé selon l'une quelconque des revendications précédentes, caractérisé en ce que la température de réaction est de 40 à 90 °C.

15. Procédé selon l'une quelconque des revendications précédentes, caractérisé en ce que la température de réaction est de 70 à 90 °C.

16. Procédé selon l'une quelconque des revendications précédentes, caractérisé en ce que la durée de la réaction est de 2 à 48 h.

## Claims

1. A process for the preparation of a solution of stannous salts of an acid with non-oxidising anion from metallic tin characterised by reacting metallic tin with a solution of an acid with non-oxidising anion in the presence, as a catalyst, of finely divided particles of a material having a hydrogen release overvoltage of lower than 100 mV as determined for current densities of the order of 1 mAcm$^{-2}$.

2. A process according to claim 1 characterised in that the catalyst is a precious metal.

3. A process according to claim 2 characterised in that the precious metal is selected from platinum, palladium and ruthenium.

4. A process according to claim 2 or claim 3 characterised in that the precious metal is disposed on an electrically conductive support with a large specific surface area.

5. A process according to claim 4 characterised in that the precious metal is disposed on activated carbon.

6. A process according to claim 5 characterised in that the catalyst is activated carbon impregnated with platinum or ruthenium at up to 5 % by weight.

7. A process according to any one of the preceding claims characterised in that the metallic tin is used in the form of tin powder or tin granules.

8. A process according to any one of the preceding claims characterised in that the solution of acid with a non-oxidising anion is a concentrated solution.

9. A process according to any one of the preceding claims characterised in that the acid with non-oxidising anion is fluoboric acid.

10. A process according to any one of claims 1 to 8 characterised in that the acid with non-oxidising anion is sulphuric acid.

11. A process according to any one of the preceding claims characterised in that the metallic tin is used in excess with respect to stoichiometry.

12. A process according to any one of the preceding claims characterised in that the catalyst is used in proportions corresponding to a ratio by weight of from $4 \cdot 10^{-5}$ to $2 \cdot 10^{-3}$ with respect to the weight of tin involved in the process.

13. A process according to claim 12 characterised in that the catalyst is used in proportions corresponding to a ratio by weight of $10^{-4}$ to $6 \cdot 10^{-4}$ with respect to the weight of tin involved in the process.

14. A process according to any one of the preceding claims characterised in that the reaction temperature is from 40 to 90 °C.

15. A process according to any one of the preceding claims characterised in that the reaction temperature is from 70 to 90 °C.

16. A process according to any one of the preceding claims characterised in that the duration of the reaction is from 2 to 48 hours.

**Patentansprüche**

1. Verfahren zur Herstellung einer Lösung von Zinn(II)-Salzen einer Säure mit einem nicht oxidierenden Anion ausgehend von metallischem Zinn, dadurch gekennzeichnet, daß man metallisches Zinn mit einer Lösung einer Säure mit einem nicht oxidierenden Anion in Gegenwart fein zerteilter Partikel eines Stoffes als Katalysator reagieren läßt, der eine Wasserstoff-Freisetzungs-Überspannung unterhalb von 100 mV aufweist, bestimmt für Stromdichten in der Größenordnung von 1 mA/cm$^2$.

2. Verfahren nach Anspruch 1, dadurch gekennzeichnet, daß der Katalysator ein Edelmetall ist.

3. Verfahren nach Anspruch 2, dadurch gekennzeichnet, daß das Edelmetall ausgewählt wird aus Platin, Palladium und Ruthenium.

4. Verfahren nach Anspruch 2 oder Anspruch 3, dadurch gekennzeichnet, daß das Edelmetall auf einen elektrisch leitenden Träger mit großer spezifischer Oberfläche aufgebracht wird.

5. Verfahren nach Anspruch 4, dadurch gekennzeichnet, daß das Edelmetall auf Aktivkohle aufgebracht ist.

6. Verfahren nach Anspruch 5, dadurch gekennzeichnet, daß der Katalysator Aktivkohle ist, die mit bis zu 5 Gew.-% Platin oder Ruthenium imprägniert ist.

7. Verfahren nach einem der vorhergehenden Ansprüche, dadurch gekennzeichnet, daß das metallische Zinn in Form von Zinnpulver oder Zinnkörnern verwendet wird.

8. Verfahren nach einem der vorhergehenden Ansprüche, dadurch gekennzeichnet, daß die Lösung der Säure mit dem nicht oxidierenden Anion eine konzentrierte Lösung ist.

9. Verfahren nach einem der vorhergehenden Ansprüche, dadurch gekennzeichnet, daß die Säure mit nicht oxidierendem Anion Fluoborsäure ist.

10. Verfahren nach einem der Ansprüche 1 bis 8, dadurch gekennzeichnet, daß die Säure mit nicht oxidierendem Anion Schwefelsäure ist.

11. Verfahren nach einem der vorhergehenden Ansprüche, dadurch gekennzeichnet, daß das metallische Zinn bezogen auf die Stöchiometrie im Überschuß verwendet wird.

12. Verfahren nach einem der vorhergehenden Ansprüche, dadurch gekennzeichnet, daß der Katalysator in Mengen verwendet wird, die einem Gewichtsverhältnis von $4 \cdot 10^{-5}$ bis $2 \cdot 10^{-3}$ bezogen auf das in diesem Verfahren eingesetzte Zinn entsprechen.

13. Verfahren nach Anspruch 12, dadurch gekennzeichnet, daß der Katalysator in Mengen verwendet wird, die einem Gewichtsverhältnis von $10^{-4}$ bis $6 \cdot 10^{-4}$ im Verhältnis zum Gewicht des in dem Verfahren eingesetzten Zinns entsprechen.

14. Verfahren nach einem der vorhergehenden Ansprüche, dadurch gekennzeichnet, daß die Reaktionstemperatur zwischen 40 und 90 °C beträgt.

15. Verfahren nach einem der vorhergehenden Ansprüche, dadurch gekennzeichnet, daß die Reaktionstemperatur 70 bis 90 °C beträgt.

16. Verfahren nach einem der vorhergehenden Ansprüche, dadurch gekennzeichnet, daß die Dauer der Reaktion 2 bis 48 Stunden beträgt.